# EUROPEAN PATENT APPLICATION

(11) **EP 4 393 890 A1**
(43) Date of publication of application: **03.07.2024**
(21) Application number: 22938126.4
(22) Date of filing: 06.07.2022
(51) Int. Cl.: C02F 3/30, C02F 101/16

(54) **WATER TREATMENT METHOD AND SYSTEM BASED ON AOA-COUPLED EFFICIENT AUTOTROPHIC NITROGEN REMOVAL**

(30) Priority: 19.04.2022 CN 202210409949
(71) Applicant: Qingdao Spring Water Treatment Co. Ltd., Qingdao, Shandong 266599 (CN)
(72) Inventor: WU, Di, Qingdao, Shandong 266599 (CN); HAN, Wenjie, Qingdao, Shandong 266599 (CN); WANG, Yumin, Qingdao, Shandong 266599 (CN); GU, Ruihuan, Qingdao, Shandong 266599 (CN); ZHOU, Jiazhong, Qingdao, Shandong 266599 (CN); TIAN, Haicheng, Qingdao, Shandong 266599 (CN); DU, Qiangqiang, Qingdao, Shandong 266599 (CN); YANG, Zhongqi, Qingdao, Shandong 266599 (CN); JI, Genghao, Qingdao, Shandong 266599 (CN); XU, Kangkang, Qingdao, Shandong 266599 (CN)
(74) Representative: JD&P Patent Attorneys Joanna Dargiewicz & Partners
(86) International application number: PCT/CN2022/104140
(87) International publication number: WO 2023/201901

(57) **Abstract**

The present disclosure discloses a method of AOA coupled efficient autotrophic nitrogen removal water treatment and a system thereof, relating to the field of sewage treatment technology. The method includes: the sewage to be treated enters the anaerobic zone, and the effluent from the anaerobic zone enters the carbon extraction zone; the supernatant fluid obtained in the carbon extraction zone enters the autotrophic IFAS zone, and the sludge obtained is transported from the carbon extraction zone to the anoxic IFAS zone; the effluent from the autotrophic IFAS zone enters the autotrophic bacteria recovery zone, the detached biofilm from the autotrophic IFAS zone flows back to the autotrophic IFAS zone, and the effluent from the anoxic IFAS zone enters the secondary sedimentation zone. The sludge bypass pipeline ensures that ordinary activated sludge does not pass through the autotrophic IFAS zone, which is conducive to the enrichment of anammox bacteria and fundamentally avoids the loss of internal carbon sources in ordinary activated sludge. The autotrophic bacteria recovery zone ensures the recovery of detached biofilm in the autotrophic IFAS zone, achieving a balance of autotrophic nitrogen removal functional bacteria. The method of the present disclosure has the advantages in excellent denitrification effect, excellent nitrification effect, and low land occupation.

## Description

### TECHNICAL FIELD

The present disclosure relates to the field of sewage treatment technology, in particular to a method of AOA coupled efficient autotrophic nitrogen removal water treatment and a system thereof.

### BACKGROUND

With the proposal of the "3050" dual-carbon target in China, the demand for energy conservation and consumption reduction in sewage treatment is constantly increasing. On one hand, the AOA process utilizes a lower aerobic/anoxic tank volume ratio and reduces the consumption of internal carbon sources in the aerobic tank through a shorter aerobic retention time, on the other hand, it also ensures sufficient denitrification tank volume. When dealing with low influent C/N, the anoxic tank utilizes PHA synthesized during the anaerobic stage to ensure high denitrification efficiency through internal denitrification effect, and ensure high biological phosphorus removal rate through denitrification phosphorus removal, thereby reducing the demand for external carbon sources for sewage nitrogen removal and achieving energy conservation and consumption reduction in sewage treatment. The anammox process achieves autotrophic nitrogen removal of sewage by enriching autotrophic anammox bacteria. For the treatment of ammonia nitrogen type sewage, this process is often combined with shortcut nitrification process. Compared with traditional nitrification and denitrification processes, it has the advantages of saving 60% of aeration, no need to add organic carbon sources, reducing 90% of sludge production, and relatively less nitrogen oxide release. In addition, the anammox process has advantages in high denitrification load, low operating costs and small space occupation, which have been recognized as one of the most economical biological nitrogen removal processes at present. As two efficient and low consumption denitrification processes, coupling AOA with anammox can further reduce the dependence of sewage denitrification on the carbon source of raw water, achieving energy conservation and consumption reduction in sewage treatment.

The main research reports on the coupling of AOA process and anammox technology in existing technologies are shown as below:
Application No. 201910358952.3 discloses a method and device for the treatment of urban sewage by AOA process with endogenous shortcut denitrification coupled with anammox in an anaerobic zone. The device is an AOA process flow that uses activated sludge as the internal carbon source for synthesis and nitrification, by adding fillers in the anoxic zone. The nitrite generated in the aerobic zone is utilized to undergo anammox reaction with the remaining ammonia nitrogen in the raw water, the generated nitrate nitrogen can be further removed in the anoxic zone through endogenous denitrification of sludge. Application No. 201910358964.6 discloses a method and device for treating urban sewage using a full process anammox enhanced denitrification AOA process, and the device adds biofilm fillers to the AOA reactor. During the sewage treatment process, carbon source accumulates in the anaerobic zone to remove organic matter from the raw water, then enters into the aerobic zone for nitrification reaction, and the generated nitrate nitrogen enters the anoxic zone for endogenous denitrification. The anammox fillers in the AOA reactor utilizes the nitrite nitrogen generated during the nitrification and denitrification process to undergo anammox reaction with the remaining ammonia nitrogen in the raw water, enhancing denitrification. Application No. 201910762403.2 discloses a semi-shortcut coupled anammox device and method for continuous flow AOA biofilm using hydroxylamine, which inhibits NOB activity by adding hydroxylamine reagent to the aerobic tank of the reactor, resulting in a semi-shortcut nitrification reaction in the continuous flow aerobic tank, then, the mixed liquid containing ammonia nitrogen and nitrite nitrogen enter the anoxic tank of the continuous flow AOA biofilm reactor, and anaerobic ammonifying bacteria growing on biofilms undergo anammox reactions using ammonia nitrogen and nitrite nitrogen. Application No. 202110336253.6 discloses an AOA coupled anammox deep nitrogen and phosphorus removal process, which includes an anaerobic zone for internal carbon source storage and phosphate release, an aerobic zone for aerobic excessive phosphorus uptake and shortcut nitrification-anammox, and an anoxic zone for internal carbon source shortcut denitrification-anammox. Both the aerobic zone and the anoxic zone are added with active biological fillers to enrich the main functional bacteria. Application No. 202110532485.9 discloses a low oxygen aeration AOA-SBBR shortcut nitrification anammox coupled denitrification phosphorus removal integrated urban sewage treatment method. During the anaerobic stage, denitrifying phosphate accumulating organisms and denitrifying glycogen-accumulating organisms in the sludge store easily degradable organic matter in the water as an internal carbon source, and then achieve shortcut nitrification effect through ammonia oxidizing bacteria in the aerobic aeration stage, and anammox bacteria are used to convert the generated nitrite and ammonia nitrogen into N₂ under micro anoxic environmental conditions inside the fillers for denitrification. Finally, in the anoxic stage, denitrifying phosphate accumulating organisms and denitrifying glycogen-accumulating organisms are used to remove the remaining nitrate nitrogen and phosphorus in the sewage through endogenous denitrification.

Although the existing technologies mentioned above have achieved the coupling of AOA process and anammox, they have not been optimized for the optimal treatment effect of the two processes. Firstly, the activated sludge in the system will undergo an aerobic zone aeration process, leading to aerobic decomposition of its stored internal carbon source, reducing the utilization rate of raw water carbon source in the AOA process. Secondly, the activated sludge travelling throughout the system in each functional zone is coexisting with anammox biofilm in the anammox functional zone. The chaotic composition of the microbial community in the activated sludge will affect the species composition of the anammox biofilm. On the one hand, it cannot achieve efficient enrichment of anammox bacteria, and on the other hand, it is easy to cause the degradation of the existing anammox bacterial community. Therefore, coupling AOA with anammox process in this way cannot achieve a combined or even higher treatment effect between the two processes. Further research is needed to optimize the coupling process flow.

The application No. 201610164752.0 discloses an efficient sewage treatment method for nitrogen and phosphorus removal. The mixed liquid after anaerobic tank treatment is solid-liquid separated, the supernatant is introduced into the phosphorus removal tank and nitrification tank, and the sludge is introduced into the denitrification tank for endogenous denitrification. The phosphorus removal tank and nitrification tank are separated separately, so that phosphorus removal and nitrogen removal do not affect each other. The disclosure achieves nitrification and denitrification through different biological phases by adding sludge-water separation after anaerobic zone, fundamentally avoiding the internal carbon source loss of activated sludge in aerobic zone. However, the minimum total hydraulic retention time (HRT) of system in this patent is also above 18 hours, indicating that it does not truly improve the treatment efficiency of the system. In terms of process composition, there are also the following issues. Firstly, the ordinary AOA process still relies on traditional nitrification and denitrification technology, and the nitrogen removal effect is still greatly affected by the C/N of the raw water. On the basis of the extreme lack of influent carbon source, there is still a risk of exceeding the TN standard in the effluent. Secondly, when the settlement effect of the solid-liquid separation tank is poor, on the one hand, the high suspended solids (SS) of the effluent supernatant will affect the nitrification effect of the subsequent nitrification tank, leading to a deterioration of the nitrification effect of the nitrification tank. Moreover, the high sludge bypass ratio also increases the ammonia nitrogen load of the aerobic tank influent. Therefore, it is necessary to adjust the reflux ratio between the aerobic tank and the anoxic tank to meet the nitrification effect. Furthermore, the nitrification effect is ensured by the nitrification and aerobic tanks together. If the process forms used in the aerobic tank and the nitrification tank are different, their nitrification effect will inevitably differ. When the sludge bypass ratio of the solid-liquid separation tank is relatively high, the main nitrification body of the system is the aerobic tank using the activated sludge method, and too low nitrification load will cause too larger designed tank volume of the aerobic tank. Finally, the process of phosphorus removal relies on the combination of chemical phosphorus removal, denitrification phosphorus removal, and biological phosphorus removal. When the sludge bypass ratio is relatively high, it will lead to the actual process of anaerobic -anoxic - oxic (AAO) for most of the sewage treatment in the system. At this time, the carbon source utilization rate of the raw water in system will be greatly reduced, which will affect the nitrogen and phosphorus removal performance.

In practical applications, the traditional AOA process conducts the sludge-water separation in anaerobic zone, which can avoid aerobic decomposition of the internal carbon source but require higher and more rigorous design, and its nitrogen removal effect is limited by the influent carbon source. On the basis of the extreme lack of influent carbon source, the effluent TN is prone to exceed the effluent standard. Although the AOA coupled anammox process can theoretically further reduce the impact of raw water C/N on nitrogen removal efficiency, it is difficult to achieve effective enrichment of anammox bacteria due to the coexistence of ordinary activated sludge and anammox in operation, so that the treatment effect cannot be fully utilized. In summary, in order to demonstrate the advantages of AOA coupled anammox process, it is necessary to improve the existing technology.

### SUMMARY

One of the objective of the present disclosure is to provide a method of AOA coupled efficient autotrophic nitrogen removal water treatment, which redesigns the existing AOA sewage treatment process, achieves the synthesis of internal carbon sources and the hydrolysis of polyphosphate through an anaerobic zone, achieves the sludge-water separation from the mixed liquid in the anaerobic zone through a carbon extraction zone, from which supernatant fluid enters the autotrophic integrated fixed-film acticated sludge (IFAS) zone, the sludge is transferred from the carbon extraction zone to the anoxic IFAS zone. Suspended carriers are added in the autotrophic IFAS zone, and aerobic ammonia oxidizing bacteria (AOB) and anammox bacteria (AnAOB) are enriched in the outer and inner layers of the biofilm, respectively. The autotrophic bacteria recovery zone is equipped with a sludge reflux pipeline to allow the supernatant fluid to enter the anoxic IFAS zone. The sludge flows from the bottom of the autotrophic bacteria recovery zone to the inlet end of the autotrophic IFAS zone, achieving the recovery of core bacteria in the autotrophic IFAS zone. As a whole, this method has advantages in excellent denitrification effect, excellent nitrification effect, and low land occupation.

In order to achieve the above objective, the present disclosure adopts the following technical solutions:
A method of AOA coupled efficient autotrophic nitrogen removal water treatment, which includes the following steps in sequence:
a. Introducing sewage to be treated into an anaerobic zone, wherein the synthesis of carbon sources and phosphorus release in activated sludge are mainly conducted in the anaerobic zone, and the HRT in the anaerobic zone is 1-2 hours.
b. The effluent from the anaerobic zone enters the carbon extraction zone connected to the anaerobic zone, and conducting enhanced solid-liquid separation of sludge water mixture from the anaerobic zone in the carbon extraction zone; the separated supernatant enters the autotrophic IFAS zone connected to the carbon extraction zone, and discharging the separated sludge from an outlet end at the bottom of the carbon extraction zone; transporting the separated sludge to the anoxic IFAS zone through a pipeline connected to a sludge bypass pump, and transferring chemical oxygen demand (COD) to the anoxic IFAS zone in the form of activated sludge.

The HRT of the carbon extraction zone is 0.4-0.6 hours, the surface hydraulic load is ≥ 5m³/m²/h, the solid flux is ≥ 20kg/m²/h, the effluent SS is ≤ 50mg/L, and the COD loss rate is < 30%.
c. By adding suspended carriers, aerobic ammonia oxidizing bacteria and anammox bacteria in the outer and inner layers of the biofilm are enriched in the autotrophic IFAS zone. The autotrophic IFAS zone meets the following requirements: ammonia oxidation rate is 80-90%, and the nitrite nitrogen content in effluent is ≥ 2mg/L.

If the above conditions are not met, it can be achieved by adding 5mg/L of hydroxylamine hydrochloride, and stop adding when nitrite nitrogen concentration in the system is ≥ 4mg/L. At the same time, the thickness of the suspended carrier biofilm in the autotrophic IFAS zone is controlled between 400 and 1000 µm.

The autotrophic IFAS zone is designed according to 80-90% of the designed nitrification HRT, by setting of interception screens with more than 2 levels, the final level of effluent SS ::::; 150mg/L.
d. The effluent from the autotrophic IFAS zone enters the autotrophic bacteria recovery zone, and the sludge internal reflux pump connected to the sludge internal reflux pipeline between the autotrophic bacteria recovery zone and the autotrophic IFAS zone is turned on, wherein the reflux ratio is 10% to 20%. The sludge flows back from the autotrophic bacteria recovery zone to the autotrophic IFAS zone, and the supernatant of the effluent enters the anoxic IFAS zone.

The HRT of the autotrophic bacteria recovery zone is 0.2-0.4 hours, and the sedimentation effect of effluent SS is enhanced by adding magnetic particles, ensuring that the effluent SS is ::::; 50mg/L;
e. The anoxic IFAS zone undergoes endogenous shortcut denitrification-anammox reaction and endogenous denitrification phosphorus removal.

The technical advantages directly brought by the above technical solutions are as following:
Ultra-fast sludge-water separation can be achieved through the carbon extraction zone, the supernatant enters the autotrophic IFAS zone and the sludge bypasses to enter the anoxic IFAS zone. The denitrification is jointly undertaken by the autotrophic IFAS zone and the anoxic IFAS zone, and the main denitrification zone applies a sludge film composite process, which can reduce the denitrification pressure in the anoxic IFAS zone. The activated sludge avoids the loss of internal carbon source in the ordinary activated sludge by bypassing to enter the anoxic IFAS zone, and can maintain an efficient denitrification effect.

As a preferred solution of the present disclosure, the effective specific surface area of the suspended carriers in the autotrophic IFAS zone and the anoxic IFAS zone is ≥ 620m²/m³, the porosity is > 90%, and the filling rate is < 67%. The density of the suspended carriers in the autotrophic IFAS zone and the anoxic IFAS zone is 0.97-1.03g/cm³.

As another preferred solution of the present disclosure, interception screens are installed at the outlet ends of both the autotrophic IFAS zone and the anoxic IFAS zone.

Furthermore, an aeration pipeline is installed at the bottom of the autotrophic IFAS zone, and a submersible mixer is installed in the anaerobic IFAS zone and the anoxic IFAS zone.

Another objective of the present disclosure is to provide an AOA coupled efficient autotrophic denitrification water treatment system, the reaction tank is divided into an anaerobic zone, a carbon extraction zone, an autotrophic IFAS zone, an autotrophic bacteria recovery zone, an anoxic IFAS zone, and a secondary sedimentation zone in sequence.

The outlet end of the bottom of the carbon extraction zone is connected to a sludge bypass pipeline, and the other end of the sludge bypass pipeline is connected to the anoxic IFAS zone. The sludge obtained from the sedimentation of the carbon extraction zone is transported to the bottom of the anoxic IFAS zone through the sludge bypass pipeline.

The outlet end of the secondary sedimentation zone is equipped with a sludge external reflux pipeline, and the other end of the sludge external reflux pipeline is connected to the anaerobic zone. Through the sludge external reflux pipeline, a portion of the sludge obtained from the secondary sedimentation zone returns to the anaerobic zone.

The autotrophic IFAS zone and the autotrophic bacteria recovery zone are equipped with a sludge internal reflux pipeline, through which the detached biofilm in the autotrophic IFAS zone is returned from the autotrophic bacteria recovery zone to the autotrophic IFAS zone.

The anaerobic zone is used for the synthesis of carbon sources and the release of phosphorus in activated sludge, and the HRT of the anaerobic zone is 1-2 hours.

The HRT of the carbon extraction zone is 0.4-0.6 hours, the surface hydraulic load is ≥ 5m³/m²/h, the solid flux is ≥ 20kg/m²/h, the effluent SS is ::::; 50mg/L, and the COD loss rate is<30%.

The autotrophic IFAS zone is designed according to 80-90% of the designed nitrification HRT, by setting of interception screens with more than 2 levels, the final level of effluent SS ::::; 150mg/L.

The HRT of the autotrophic bacteria recovery zone is 0.2-0.4 hours, and the sedimentation effect of effluent SS is enhanced by adding magnetic particles to it, ensuring that the effluent SS is ≤ 50mg/L.

The anoxic IFAS zone is designed according to 20-30% of the designed nitrification HRT.

The technical advantages directly brought by the above technical solutions are as below:
1) The denitrification effect is excellent, and nitrogen removal is jointly undertaken by the autotrophic IFAS zone and the anoxic IFAS zone. Firstly, the main denitrification zone applies a sludge film composite process, which couples shortcut nitrification and anammox in the same reactor for denitrification to reduce nitrogen load, reducing denitrification pressure in the anoxic zone. Secondly, by implementing sludge-water separation in the carbon extraction zone after the anaerobic zone, it ensures that ordinary activated sludge does not pass through the autotrophic IFAS zone, which is conducive to the enrichment of anammox bacteria and fundamentally avoids the loss of internal carbon sources in ordinary activated sludge, laying the foundation for achieving efficient endogenous denitrification for nitrogen and phosphorus removal in the anaerobic IFAS zone. Finally, the anoxic IFAS zone adopts a sludge film composite process for denitrification through shortcut denitrification and anammox, which can further reduce the limitation of denitrification on carbon sources. The minimum of the stable TN effluent can be achieved below 10mg/L on the basis of influent C/N ::::; 2, and can be further reduced to 5mg/L after optimized operation.
2) The nitrogen removal effect is stable. In response to the difficulty of long-term stable operation of anammox in the autotrophic IFAS zone, through extensive experimental researches, functional bacterial community based on sludge self reflux balance autotrophic nitrogen removal have been formed. The addition of hydroxylamine maintains the stability and efficiency of the system, and the control of biofilm thickness achieves efficient mass transfer and oxygen transfer, effectively ensuring its denitrification effect.
3) The nitrification effect is excellent. In response to the low nitrification efficiency of the activated sludge system, the removal of ammonia nitrogen is jointly undertaken by the autotrophic IFAS zone and the anoxic IFAS zone. The autotrophic IFAS zone achieves the main denitrification function through shortcut nitrification and anammox, at the same time, for the small amount of ammonia nitrogen carried by the effluent of the autotrophic IFAS zone and some ammonia nitrogen caused by sludge bypass, the anoxic IFAS zone conducts coupled shortcut denitrification for nitrogen removal, so that the ammonia nitrogen removal rate of the system can be achieved to be greater than 95%. By optimizing and adjusting, it can be achieved that the ammonia nitrogen in the effluent is less than 0.5mg/L.
4) The land occupation is small, and the main deamination zone and denitrification zone are both undertaken by the autotrophic IFAS zone, it applies the IFAS process based on sludge self reflux, which has a higher load. While the anoxic IFAS zone uses the sludge film composite process, which has a higher treatment load than that of the traditional activated sludge method, thus achieving significant land saving effects. The total HRT of the entire process is only less than 60% of the traditional sewage treatment process HRT.

### BRIEF DESCRIPTION OF THE DRAWING

The following is a further illustration of the present disclosure in conjunction with the accompanying drawings:

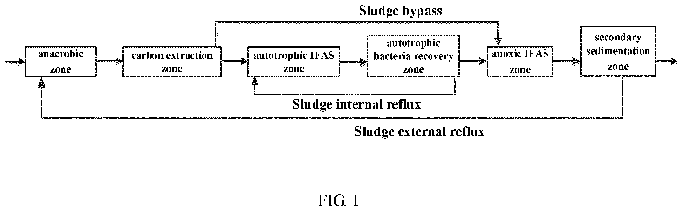

FIG. 1 is a flowchart of the processing process of the present disclosure.

### DETAILED DESCRIPTION OF THE EMBODIMENTS

The present disclosure provides an AOA coupled efficient autotrophic nitrogen removal water treatment method and system. In order to make the advantages and technical solutions of the present disclosure more clear and definite, the following will provide a detailed illustration of the present disclosure in conjunction with specific embodiment.

Unless otherwise explicitly stated, in the entire specification and claims, the term "includes" or its transformations such as "including" will be considered as including the stated elements or components, without excluding other elements or other components.

In this article, for the convenience of description, spatial relative terms such as "under", "below", "lower", "above", "on", "upper", etc. can be used to describe the relationship between a component or feature and another component or feature in the accompanying drawings. It should be comprehend that the spatial relative terms is intended to encompass different directions of objects in use or operation, except for the directions depicted in the diagram. For example, if the object in the figure is flipped, the component described as "below" or "under" other component or feature will be oriented "above" the component or feature. Therefore, the exemplary term "below" can include both the lower and upper directions. The component can also have other orientations (rotation of 90 degrees or other orientations) and the spatial relative terms used in this article should be explained accordingly.

Firstly, a detailed explanation of some technical terms involved in the present disclosure is provided.
Design nitrification HRT: The nitrification retention time designed according to the design regulations of the activated sludge method in the *"Standard for design of outdoor wastewater engineering",* unit h;
Design denitrification HRT: The denitrification retention time designed according to the design regulations of the activated sludge method in the *"Standard for design of outdoor wastewater engineering",* unit h;
Surface hydraulic load: The amount of influent water per unit zone per hour that the horizontal cross-section of the carbon migration zone can withstand, unit m³/m²/h;
Solid flux: The amount of influent SS per unit zone per hour that the horizontal cross-section of the carbon migration zone can withstand, kg/m²/h;

The "sludge bypass pump" in the present disclosure specifically refers to a sludge pump, which is connected to a pipeline between the carbon extraction zone and the anoxic IFAS zone. Its function is to pass the sludge at the bottom of the carbon extraction zone into the anoxic IFAS zone.

Next, the main innovative points of the present disclosure are explained as follows:
The AOA process adopts an anaerobic → aerobic (oxic) → anoxic process. The anaerobic zone uses activated sludge to absorb the organic matter contained in the influent, synthesize PHA (internal carbon source) and store it in the cells, at the same time, phosphorous releasing occurs. The aerobic zone mainly completes the nitrification of ammonia nitrogen, and the anoxic zone utilizes the internal carbon source synthesized by activated sludge in the anaerobic section for denitrification nitrogen removal and denitrification phosphorus removal, achieving two purposes of nitrogen and phosphorus removal and improving the utilization rate of raw water carbon source. So, the core of AOA process lies in the setting of aerobic zone, either the tank capacity must be small to reduce the loss of internal carbon sources, but the reduction of aerobic tank capacity will affect its nitrification effect. Alternatively, an innovative process form is required to employ to prevent activated sludge from passing through aerobic zones, thereby fundamentally avoiding carbon loss. On the other hand, the existing AOA process still relies on traditional nitrification and denitrification for nitrogen removal, which cannot largely overcome the limitations of nitrogen removal by the carbon source of the raw water. However, for the coupled anammox for nitrogen removal, there is also problem of unstable anammox operation, which affects nitrogen removal efficiency.

Based on the above considerations, the present disclosure has redesigned the reaction tank, mainly considering the following three aspects:
Firstly, in response to the problem of carbon loss in the aerobic zone of the anaerobic-oxic-anoxic (AOA) process, the process form is based on the biofilm & magnetic-separation (BFM) process, using pure film moving bed biofilm reactor (MBBR) coupled with magnetic loading precipitation technology to achieve absolute separation of the biological phase in the aerobic/anoxic zone. The aerobic zone operates in the form of pure film MBBR, while the anoxic zone operates in the form of activated sludge.

Secondly, for the implementation of pure film MBBR in the aerobic zone, on the one hand, the impact of influent SS on biofilm mass transfer should be considered, and on the other hand, the impact of biofilm detachment (humic sludge) on the system treatment load should also be considered. Based on a large number of experimental rules, the boundary conditions of influent SS were further determined based on the determination of SS impact boundary conditions in the pure film MBBR process and the COD removal capacity in the aerobic zone; In addition, in response to the characteristics of low moisture content and easy gas production in anaerobic sludge, a magnetic coagulation precipitation process is adopted, which achieves efficient and stable sludge-water separation by combining high solid flux with sludge concentration of the bypass sludge and the sludge in the system, and setting appropriate hydraulic loads.

Thirdly, in response to the problem that the denitrification effect of the existing process is greatly affected by the raw water carbon source, it is coupled with anammox on the basis of the existing AOA process. In the aerobic stage, the shortcut nitrification-anammox process (CANON process) is adopted. In response to the characteristic of shortcut nitrifying bacteria (AOB) being easy to enrichment in sludge, the enrichment efficiency of shortcut nitrifying bacteria is enhanced by setting internal sludge reflux, achieving the stability of CANON microbial community. In response to the difficulty of anammox operation, the stable and efficient autotrophic nitrogen removal effect is achieved through the addition of hydroxylamine and the control of biofilm thickness. In addition, by setting up an anoxic IFAS zone, utilizing the shortcut denitrification-anammox process (PDN/A process), and using the autotrophic nitrogen removal effect at low load, on the one hand, the nitrogen removal pressure in the autotrophic IFAS zone can be reduced, and on the other hand, targeted removal of ammonia nitrogen carried by bypass sludge can be achieved.

The above three points are closely connected and inseparable. The carbon extraction zone ensures the operation status of pure film autotrophic IFAS through good sludge-water separation effect. The operation status of autotrophic IFAS not only fundamentally eliminates the problem of carbon loss of ordinary activated sludge in the aerobic zone, but also strengthens the enrichment efficiency of suspended carriers for anammox bacteria. Setting of sludge self-reflux in the autotrophic IFAS zone, the addition of hydroxylamine and the control of biofilm thickness maintain a stable and efficient autotrophic denitrification effect. The establishment of anoxic IFAS zone further strengthens the proportion of autotrophic denitrification and achieves high standard TN emissions.

As shown in FIG. 1, the system of the present disclosure, including a reaction tank which is the main improvement point of the present disclosure. Re-dividing the reaction tank into an anaerobic zone, a carbon extraction zone, an autotrophic IFAS zone, an autotrophic bacteria recovery zone, an anoxic IFAS zone, and a secondary sedimentation zone in sequence.

Wherein, the main inlet pipeline is connected to the anaerobic zone, and the water to be treated first enters the anaerobic zone through the main inlet pipeline. In the anaerobic zone, the organic matter in the influent is adsorbed by activated sludge, generating PHA and storing in the body. At the same time, anaerobic phosphorus release occurs, and the HRT of the anaerobic zone is 1-2 hours.

To maintain connectivity between the anaerobic zone and the carbon extraction zone, for example, a drainage hole located at the upper part of the effluent end of the anaerobic zone may work. The treated water from the anaerobic zone enters the carbon extraction zone through the drainage hole. In the carbon extraction zone, sludge is deposited below and clear water is above. A sludge bypass pump is installed on the sludge bypass pipeline connected to the outlet end at the bottom of the carbon extraction zone. The other end of the sludge bypass pipeline is connected to the selected anoxic IFAS zone to transport the sludge to the bottom of the anoxic IFAS zone.

A sludge bypass pipeline is installed at the bottom of the carbon extraction zone to allow the supernatant to enter the autotrophic IFAS zone. The sludge flows from the carbon extraction zone to the anoxic IFAS zone, transferring COD in the form of activated sludge to the anoxic IFAS zone.

By adding suspension carriers in the autotrophic IFAS zone, aerobic ammonia oxidizing bacteria (AOB) and anammox bacteria (AnAOB) are enriched in the outer and inner layers of the biofilm, respectively.

The anoxic IFAS zone undergoes endogenous denitrification for nitrogen removal and phosphorus removal, as well as anammox denitrification. The carbon extraction zone utilizes the internal carbon source carried and transformed by the bypass sludge for endogenous denitrification for nitrogen removal and phosphorus removal. The suspended carriers enrich anammox bacteria for autotrophic nitrogen removal of anammox.

The carbon extraction zone mainly uses magnetic loading precipitation process, which has the best sludge-water separation effect compared to ordinary precipitation process. If the sludge and water are separated by adding magnetic particles to the carbon extraction zone, in order to ensure that the system HRT is below 10 hours, the following requirements need to be met for the carbon extraction zone:
The HRT of the carbon extraction zone is 0.4-0.6 hours, the surface hydraulic load is ≥ 5m³/m²/h, the solid flux is ≥ 20kg/m2/h, the effluent SS is ≤ 50mg/L, and the COD loss rate is < 30%.

The autotrophic IFAS zone is designed according to 80-90% of the designed nitrification HRT, by setting of interception screens with more than 2 levels, the final level of effluent SS ::::; 150mg/L.

The HRT of the autotrophic bacteria recovery zone is 0.2-0.4 hours, and the sedimentation effect of effluent SS is enhanced by adding magnetic particles to it, ensuring that the effluent SS is ≤ 50mg/L.

The anoxic IFAS zone is designed according to 20-30% of the designed nitrification HRT.

The effective specific surface area of the suspended carriers in the autotrophic IFAS zone and the anoxic IFAS zone is ≥ 620m²/m³, the porosity is > 90%, and the filling rate is < 67%. The density of the suspended carriers in the autotrophic IFAS zone and the anoxic IFAS zone is 0.97-1.03g/cm³.

Interception screens are installed at the outlet ends of both the autotrophic IFAS zone and the anoxic IFAS zone, the main function of which is to intercept suspended carriers. In order to prevent the suspension carriers from rushing out, the aperture of the through-hole on the interception screens mentioned above is smaller than the diameter of the suspension carriers. To ensure the effluent of the autotrophic IFAS zone meets the requirement, the level of interception screens is set as 2 levels, so as to ensure the final level of effluent SS ::::; 150mg/L.

An aeration pipeline is installed at the bottom of the autotrophic IFAS zone, and a submersible mixer is installed in the anaerobic IFAS zone and the anoxic IFAS zone. The specific structure of the aeration pipeline and submersible mixer can be achieved by referring to existing technology.

The following provides a detailed description of the processing technology of the present disclosure in conjunction with the above system.

The specific steps include:
The first step, introducing sewage to be treated into an anaerobic zone, wherein the synthesis of carbon sources and phosphorus release in activated sludge are mainly conducted in the anaerobic zone, and the HRT in the anaerobic zone is 1-2 hours.

The second step, the effluent from the anaerobic zone enters the carbon extraction zone connected to the anaerobic zone; conducting enhanced solid-liquid separation of sludge water mixture from the anaerobic zone in the carbon extraction zone; the separated supernatant enters the autotrophic IFAS zone connected to the carbon extraction zone, and discharging the separated sludge from an outlet end at the bottom of the carbon extraction zone; transporting the separated sludge to the anoxic IFAS zone through a pipeline connected to a sludge bypass pump, and transferring COD to the anoxic IFAS zone in the form of activated sludge. The anoxic IFAS zone and the autotrophic IFAS zone are equipped with autotrophic bacteria recovery zones.

The HRT of the carbon extraction zone is 0.4-0.6 hours, the surface hydraulic load is ≥ 5m³/m²/h, the solid flux is ≥ 20kg/m²/h, the effluent SS is ≤ 50mg/L, and the COD loss rate is < 30%.

The third step, by adding suspended carriers, aerobic ammonia oxidizing bacteria and anammox bacteria in the outer and inner layers of the biofilm are enriched in the autotrophic IFAS zone. The autotrophic IFAS zone meets the following requirements: ammonia oxidation rate is 80-90%, and the nitrite nitrogen in effluent is ≥ 2mg/L.

If the above conditions are not met, it can be achieved by adding 5mg/L of hydroxylamine hydrochloride, and stop adding when nitrite nitrogen concentration in the system is ≥ 4mg/L. At the same time, the biofilm thickness of the suspended carriers in the autotrophic IFAS zone is controlled between 400 and 1000 µm.

The autotrophic IFAS zone is designed according to 80-90% of the designed nitrification HRT, by setting of interception screens with more than 2 levels, the final level of effluent SS ::::; 150mg/L.

The fourth step, the effluent from the autotrophic IFAS zone enters the autotrophic bacteria recovery zone, and the sludge internal reflux pump connected to the sludge internal reflux pipeline between the autotrophic bacteria recovery zone and the autotrophic IFAS zone is turned on, wherein the reflux ratio is 10% to 20%. The sludge flows back from the autotrophic bacteria recovery zone to the autotrophic IFAS zone, and the supernatant of the effluent enters the anoxic IFAS zone.

The HRT of the autotrophic bacteria recovery zone is 0.2-0.4 hours, and the sedimentation effect of effluent SS is enhanced by adding magnetic particles, ensuring that the effluent SS is ::::; 50mg/L.

The fifth step, the anoxic IFAS zone undergoes anaerobic amammox reaction and endogenous denitrification phosphorus removal.

The following will provide a detailed description of the present disclosure in conjunction with specific embodiments.

### Embodiment 1

Three sets of sewage treatment plants are provided, numbered 1-3, with a designed water volume of 80m³/d, all use AOA coupled efficient autotrophic denitrification water treatment system in the biochemical section of the plant. For the sludge-water separation effect in the anaerobic zone, traditional gravity sedimentation tank, magnetic separation sedimentation tank, and efficient sedimentation tank are used, with HRT set at 1 hour. The addition dosage of reagents in each device is consistent, and the effluent SS of each device is compared and verified. The experimental results are shown in Table 1.

**Table 1 SS of effluent from different sludge-water separation processes (mg/L)**

| | Gravity sedimentation tank | Magnetic separation sedimentation tank | Efficient sedimentation tank |
|---|---|---|---|
| influent SS | 4300 | 4600 | 4400 |
| effluent SS | 677 | 4 | 174 |

The results shows that the sedimentation effect of the gravity sedimentation tank is the worst, and there is a significant phenomenon of sludge floating due to gas production in the later stage, leading to a further increase in effluent SS. However, the overall sedimentation effect of the high-efficiency sedimentation tank is poor, with effluent SS of 174mg/L. The magnetic separation sedimentation tank can achieve better sludge-water separation effect by adding magnetic particles, and the measured average SS of the effluent is only 4mg/L. It can be seen that for the sedimentation of sludge from anaerobic tank in effluent, on the one hand, the sludge passing through the anaerobic section is easy to generate gas to cause floating, on the other hand, traditional sludge-water separation processes require a large tank capacity and occupy too much land. To balance the treatment effect and land occupation, it is required to select magnetic separation sedimentation process.

### Embodiment 2

Five groups of sewage treatment plants, numbered A-E, all use AOA coupled efficient autotrophic denitrification water treatment systems in the biochemical section. For the sludge-water separation effect in the anaerobic zone, magnetic separation sedimentation process is used, and the single factor variable is controlled as the HRT of magnetic separation sedimentation, which is set to 0.3, 0.4, 0.5, 0.6, and 0.7 hours, respectively. The addition dosage of reagents in each device is consistent, and the effluent SS from each device is compared and verified. The experimental results are shown in Table 2.

**Table 2 Effluent SS under different magnetic separation precipitation HRT (mg/L)**

| HRT(h) | 0.3 | 0.4 | 0.5 | 0.6 | 0.7 |
|---|---|---|---|---|---|
| influent SS | 4510 | 4432 | 4645 | 4449 | 4339 |
| effluent SS | 234 | 166 | 124 | 107 | 111 |

The results show that when the HRT of magnetic loading precipitation in the carbon extraction zone is 0.3 hours, the effluent SS slightly exceeds the standard. When the HRT is 0.4 to 0.6 hours, the effluent SS of the system can reach below 200mg/L. However, when the HRT is further extended to 0.7 hours, the effluent SS has basically stabilized. It can be seen that there is no need to set a long HRT for magnetic separation precipitation, and good SS removal effect can be achieved within 0.4 to 0.6 hours.

### Embodiment 3

Three sets of CANON sewage treatment plants are provided, numbered 1-3, each of which is configured to treat mainstream municipal sewage, followed by an AO activated sludge method deep denitrification unit. The operating modes of 1-3 are pure film MBBR, sludge film composite MBBR (self sludge reflux), and sludge film composite MBBR (connected to deep denitrification unit sludge), respectively. The denitrification load rates of each plant are shown in Table 3, and the relative abundance of functional bacteria in different biological phases is shown in Table 4. It can be seen that the CANON process adopts the form of pure film MBBR, due to the relatively low enrichment efficiency of biofilm on AOB, the imbalance of bacterial population proportion limits the increase of denitrification load. However, the use of the sludge film composite MBBR system formed by sludge from other external processes will affect the enrichment efficiency of functional bacteria in the system due to the interference of sludge phase, thereby further reducing the denitrification load. By using the IFAS form of sludge self reflux, the balance between AOB and AnAOB can be achieved. The activated sludge is mainly enriched with AOB, while the biofilm is mainly enriched with AnAOB, thus achieving better denitrification effect.

**Table 3 Processing load of CANON-MBRB system under different operating modes**

| Device number | 1 | 2 | 3 |
|---|---|---|---|
| Operating mode | Pure film MBBR | Sludge film composite MBBR (sludge self reflux) | Sludge film composite MBBR (connected to deep denitrification sludge) |
| Denitrification load rate | 75% | 100% | 33% |

**Table 4 Relative abundance of functional bacteria in different biological phases of CANON-MBRB system under different operating modes**

| Device number | 1 | 2 | 3 |
|---|---|---|---|
| Operating mode | Pure film MBBR | Sludge film composite MBBR (sludge self reflux) | Sludge film composite MBBR (connected to deep denitrification sludge) |
| Biofilm | AOB:5.7%; | AOB:4.4%; | AOB: 1.2%; |
| | AnAOB:22.4 | AnAOB:24.1% | AnAOB:13.4% |
| Activated sludge | / | AOB:9.8% | AOB:0.6% |
| | | AnAOB:2.3% | AnAOB:0.1% |

### Embodiment 4

Five groups of autotrophic IFAS devices based on anammox are provided, numbered a-e, all of which are used to treat mainstream municipal sewage. To ensure the stable shortcut nitrification effect of the system, the optimal dosing concentration is verified by adding hydroxylamine hydrochloride. The experimental results are shown in Table 5, as the concentration of hydroxylamine hydrochloride increased from 0mg/L to 5.0mg/L, the denitrification load of the CANON-MBBR system also reached its highest, with a nitrite nitrogen concentration of 4. 1mg/L in the system. At this time, the addition dosage concentration of hydroxylamine hydrochloride and the nitrite nitrogen concentration of the system can be considered as the optimal concentration. When the concentration of hydroxylamine hydrochloride is further increased, the system treatment load rate does not increase but decreases, which may be due to the toxicity inhibition to anammox bacteria caused by excessive hydroxylamine. It can be seen that a good CANON-MBBR system is not necessarily better with a higher amount of nitrite nitrogen, nor is it better with a larger amount of hydroxylamine added. From the perspective of overall operational effectiveness, the CANON-MBBR system can achieve the highest level of denitrification when the addition dosage of hydroxylamine hydrochloride is 5mg/L and the concentration of nitrite nitrogen is 4mg/L. Moreover, when the concentration of nitrite nitrogen is 2-4mg/L, the denitrification effect of the system is positively correlated with the concentration of nitrite nitrogen, Thus hydroxylamine hydrochloride can be added when the concentration of nitrite nitrogen in the system drops to 2mg/L.

**Table 5 System denitrification load rate under different hydroxylamine dosing concentrations (%)**

| | | | | | | |
|---|---|---|---|---|---|---|
| Addition dosage concentration of hydroxylamine hydrochloride | 0.0 | 1.0 | 3.0 | 5.0 | 7.0 | 10 |
| Denitrification load rate (%) | 68 | 73 | 87 | 100 | 97 | 88 |
| Nitrite nitrogen in effluent (mg/L) | 2.1 | 2.7 | 3.3 | 4.1 | 4.4 | 5.7 |

### Embodiment 5

A autotrophic IFAS reactor is used to treat mainstream municipal sewage, and on the basis of relatively stable inlet water quality, the arrangement of the aeration pipeline in the system is adjusted to control the biofilm thickness to different thicknesses, and the effect of biofilm thickness on the denitrification load of the system is verified. The test results are shown in Table 6.

**Table 6 System denitrification load rate under different biofilm thicknesses (%)**

| | | | | | | |
|---|---|---|---|---|---|---|
| Biofilm thickness | 220 | 340 | 420 | 830 | 1120 | 1280 |
| Denitrification load rate (%) | 68 | 73 | 87 | 100 | 95 | 88 |

The results indicate that when the biofilm thickness is between 400 and 1000µm, the nitrogen removal load of the system can reach over 85% of the maximum load. In addition, the biofilm thickness is either too low or too high, which is not conducive to the decontamination effect. In summary, the thickness of the biofilm has a significant impact on the treatment efficiency of the CANON-MBBR system. During daily control, it is necessary to ensure that the thickness of the CANON-MBBR biofilm is maintained between 400µm and 1000µm as much as possible. At this time, the denitrification load of the CANON-MBBR system can be maintained at a relatively high level.

## Claims

1. A method of AOA coupled efficient autotrophic nitrogen removal water treatment, which comprising the following steps in sequence:
a, introducing sewage to be treated into an anaerobic zone, wherein the synthesis of carbon sources and phosphorus release in activated sludge are mainly conducted in the anaerobic zone, and the HRT in the anaerobic zone is 1-2 hours;
b, the effluent from the anaerobic zone enters the carbon extraction zone connected to the anaerobic zone, and conducting enhanced solid-liquid separation of sludge water mixture from the anaerobic zone in the carbon extraction zone; the separated supernatant enters the autotrophic IFAS zone connected to the carbon extraction zone, and discharging the separated sludge from an outlet end at the bottom of the carbon extraction zone; transporting the separated sludge to the anoxic IFAS zone through a pipeline connected to a sludge bypass pump, and transferring COD to the anoxic IFAS zone in the form of activated sludge;
the HRT of the carbon extraction zone is 0.4-0.6 hours, the surface hydraulic load is ≥ 5m³/m²/h, the solid flux is ≥ 20kg/m²/h, the effluent SS is ≤ 50mg/L, and the COD loss rate is < 30%;
c, by adding suspended carriers, aerobic ammonia oxidizing bacteria and anammox bacteria in the outer and inner layers of the biofilm are enriched in the autotrophic IFAS zone. The autotrophic IFAS zone meets the following requirements: ammonia oxidation rate is 80-90%, and the nitrite nitrogen content in effluent is ≥ 2mg/L;
if the above conditions are not met, it can be achieved by adding 5mg/L of hydroxylamine hydrochloride, and stop adding when nitrite nitrogen concentration in the system is ≥ 4mg/L, at the same time, the thickness of the suspended carrier biofilm in the autotrophic IFAS zone is controlled between 400 and 1000 µm;
the autotrophic IFAS zone is designed according to 80-90% of the designed nitrification HRT, by setting of interception screens with more than 2 levels, the final level of effluent SS ::::; 150mg/L;
d, the effluent from the autotrophic IFAS zone enters the autotrophic bacteria recovery zone, and the sludge internal reflux pump connected to the sludge internal reflux pipeline between the autotrophic bacteria recovery zone and the autotrophic IFAS zone is turned on, wherein the reflux ratio is 10% to 20%, then the sludge flows back from the autotrophic bacteria recovery zone to the autotrophic IFAS zone, and the supernatant of the effluent enters the anoxic IFAS zone;
the HRT of the autotrophic bacteria recovery zone is 0.2-0.4 hours, and the sedimentation effect of effluent SS is enhanced by adding magnetic particles , ensuring that the effluent SS is ::::; 50mg/L;
e, the anoxic IFAS zone undergoes endogenous shortcut denitrification-anammox reaction and endogenous denitrification phosphorus removal.

2. The method of AOA coupled efficient autotrophic nitrogen removal water treatment according to claim 1, wherein the effective specific surface area of the suspended carriers in the autotrophic IFAS zone and the anoxic IFAS zone is ≥ 620m²/m³, the porosity is > 90%, and the filling rate is < 67%, the density of the suspended carriers in the autotrophic IFAS zone and the anoxic IFAS zone is 0.97-1.03g/cm³.

3. The method of AOA coupled efficient autotrophic nitrogen removal water treatment according to claim 1, **characterized in that** the interception screens are installed at the outlet ends of both the autotrophic IFAS zone and the anoxic IFAS zone.

4. The method of AOA coupled efficient autotrophic nitrogen removal water treatment according to claim 1, **characterized in that** an aeration pipeline is installed at the bottom of the autotrophic IFAS zone, and a submersible mixer is installed in the anaerobic IFAS zone and the anoxic IFAS zone.

5. An AOA coupled efficient autotrophic denitrification water treatment system, which comprising a reaction tank, **characterized in that** the reaction tank is divided into an anaerobic zone, a carbon extraction zone, an autotrophic IFAS zone, an autotrophic bacteria recovery zone, an anoxic IFAS zone, and a secondary sedimentation zone in sequence;
the outlet end of the bottom of the carbon extraction zone is connected to a sludge bypass pipeline, and the other end of the sludge bypass pipeline is connected to the anoxic IFAS zone, the sludge obtained from the sedimentation of the carbon extraction zone is transported to the bottom of the anoxic IFAS zone through the sludge bypass pipeline;
the outlet end of the secondary sedimentation zone is equipped with a sludge external reflux pipeline, and the other end of the sludge external reflux pipeline is connected to the anaerobic zone, through the sludge external reflux pipeline, a portion of the sludge obtained from the secondary sedimentation zone is returned to the anaerobic zone;
the autotrophic IFAS zone and the autotrophic bacteria recovery zone are equipped with a sludge internal reflux pipeline, through which the detached biofilm in the autotrophic IFAS zone is returned from the autotrophic bacteria recovery zone to the autotrophic IFAS zone;
the anaerobic zone is used for the synthesis of carbon sources and the release of phosphorus in activated sludge, and the HRT of the anaerobic zone is 1-2 hours;
the HRT of the carbon extraction zone is 0.4-0.6 hours, the surface hydraulic load is ≥ 5m³/m²/h, the solid flux is ≥ 20kg/m²/h, the effluent SS is ::::; 50mg/L, and the COD loss rate is<30%;
the autotrophic IFAS zone is designed according to 80-90% of the designed nitrification HRT, by setting of interception screens with more than 2 levels, the final level of effluent SS ::::; 150mg/L;
the HRT of the autotrophic bacteria recovery zone is 0.2-0.4 hours, and the sedimentation effect of effluent SS is enhanced by adding magnetic particles to it, ensuring that the effluent SS is ≤ 50mg/L;
the anoxic IFAS zone is designed according to 20-30% of the designed nitrification HRT.
